# EUROPÄISCHE PATENTSCHRIFT

(11) **EP 3 408 415 B1**
(45) Veröffentlichungstag und Bekanntmachung des Hinweises auf die Patenterteilung: **13.11.2019**
(21) Anmeldenummer: 17702566.5
(22) Anmeldetag: 25.01.2017
(51) Int. Cl.: C13B 30/02, B01D 9/00

(54) **VERFAHREN ZUR GEWINNUNG VON KRISTALLEN AUS EINER MUTTERLÖSUNG UND DAFÜR GEEIGNETER KRISTALLISATIONSAPPARAT**
METHOD FOR OBTAINING CRYSTALS FROM A MOTHER SOLUTION, AND CRYSTALLIZATION DEVICE SUITABLE FOR THIS PURPOSE
PROCÉDÉ D'OBTENTION DE CRISTAUX À PARTIR D'UNE SOLUTION-MÈRE ET CRISTALLISOIR APPROPRIÉ

(30) Priorität: 25.01.2016 DE 102016101217
(43) Veröffentlichungstag der Anmeldung: 05.12.2018
(73) Patentinhaber: BMA Braunschweigische Maschinenbauanstalt AG, 38122 Braunschweig (DE)
(72) Erfinder: MAHRHOLZ, Jens, 38106 Braunschweig (DE); LEHNBERGER, Andreas, 38106 Braunschweig (DE)
(74) Vertreter: Einsel, Martin
(86) Internationale Anmeldenummer: PCT/EP2017/051493
(87) Internationale Veröffentlichungsnummer: WO 2017/129590

(56) Entgegenhaltungen:
- EP-A2- 0 370 365
- WO-A1-01/56956
- US-A1- 2015 017 085
- YU ET AL: "Recent Advances in Crystallization control", CHEMICAL ENGINEERING RESEARCH AND DESIGN, ELSEVIER, AMSTERDAM, NL, Bd. 85, Nr. 7, 1. Januar 2007 (2007-01-01) , Seiten 893-905, XP022525677, ISSN: 0263-8762, DOI: 10.1205/CHERD06234
- VINCENZO LIOTTA ET AL: "Monitoring and Feedback Control of Supersaturation Using ATR-FTIR to Produce an Active Pharmaceutical Ingredient of a Desired Crystal Size", ORGANIC PROCESS RESEARCH AND DEVELOPMENT, Bd. 8, Nr. 3, 1. Mai 2004 (2004-05-01), Seiten 488-494, XP055298421, US ISSN: 1083-6160, DOI: 10.1021/op049959n
- FUJIWARA M. ET AL.: "Paracetamol Crystallization Using Laser Backscattering and ATR-FTIR Spectroscopy: Metastability, Agglomeration, and Control", CRYSTAL GROWTH & DESIGN, Bd. 2, Nr. 5, 10. August 2002 (2002-08-10) , Seiten 363-370, XP002768257,
- ZHANG X Y ET AL: "Crystallization of zinc lactate in presence of malic acid", JOURNAL OF CRYSTAL GROWTH, ELSEVIER, AMSTERDAM, NL, Bd. 312, Nr. 19, 15. September 2010 (2010-09-15), Seiten 2747-2755, XP027244042, ISSN: 0022-0248 [gefunden am 2010-08-26]
- TADAYYON A. & ROHANI S.: "Control of Fines Suspension Density in the Fines Loop of a Continuous KCl Crystallizer Using Transmittance Measurement and an FBRM Probe", THE CANADIAN JOURNAL OF CHEMICAL ENGINEERING, Bd. 78, August 2000 (2000-08), Seiten 663-673, XP002768258,

## Beschreibung

Die Erfindung betrifft ein Verfahren zur Gewinnung von Kristallen aus einer Mutterlösung, bei dem Mutterlösung in einen Kristallisationsapparat gegeben wird, bei dem durch Steuerung und/oder Regelung der Temperatur eine Übersättigung der Mutterlösung herbeigeführt wird, bei dem Saatkristalle an einem Saatpunkt der Mutterlösung hinzugefügt werden, bei dem durch kontinuierliche Prozessregelung die Saatkristalle als Kristallkeime vergrößert und schließlich als Kristalle aus dem Verfahren entnommen werden und die Produktausbeute bilden, bei dem der Bildung von Kristallkeimen in der Mutterlösung durch Schritte in der Prozessregelung entgegengewirkt wird. Die Erfindung betrifft auch einen zur Durchführung des Verfahrens geeigneten Kristallisationsapparat.

Insbesondere bei der Gewinnung von Zucker, aber auch bei anderen Kohlenhydraten oder Zuckeralkoholen wird in einem wichtigen Verfahrensschritt aus einer Mutterlösung (auch als Mutterlauge bezeichnet) durch Kristallisation eine Gewinnung von Kristallen, beispielsweise also Zuckerkristallen, vorgenommen. Die Mutterlösung wird zuvor durch Verarbeitung von Zuckerrüben oder Zuckerrohr hergestellt, dann in dieser Mutterlösung eine Übersättigung herbeigeführt, zu welchem Zweck die Temperatur auf eine geeignete Höhe gesteuert wird. In die übersättigte Mutterlösung werden Saatkristalle gesetzt, die sich dann bei einer entsprechenden Prozessregelung, beispielsweise bei sinkender Temperatur im Falle einer Kühlungskristallisation oder bei konstanter Temperatur im Falle einer Verdampfungskristallisation, entsprechend vergrößern und die gewünschten Zuckerkristalle bilden.

Dabei ist stets zu beachten, dass eine Übersättigung der Mutterlösung vorhanden sein muss. Ohne eine solche Übersättigung können auch die Saatkristalle nicht wachsen, sondern lösen sich bei einer Untersättigung sogar im Laufe der Zeit auf.

Die Zuckerkristalle stellen dann die Produktausbeute dar und werden aus dem Verfahren entnommen.

Gewünscht ist dabei insbesondere im Interesse einer Weiterverarbeitung, dass die gewonnenen Zuckerkristalle alle in ungefähr der gleichen Größenordnung liegen, da das die weitere Verarbeitung vereinfacht. Dies versucht man zu erreichen, indem nur die eingesetzten Saatkristalle bei der Entstehung der Zuckerkristalle beteiligt sind.

In der Praxis bilden sich jedoch zusätzlich aus der Mutterlösung heraus selbst sogenannte Primärkeime. Darüber hinaus bilden sich durch den Einfluss des Saatgutes aus der Mutterlösung und dem Kristallisat sogenannte Sekundärkeime. Diese Primärkeime und Sekundärkeime sind dann Grundlage für weitere Zuckerkristalle. Diese nicht aus eingesetzten Saatkristallen wachsenden Zuckerkristalle sind jedoch aufgrund des späteren Beginns der Kristallbildung kleiner und stören mithin als sogenanntes Feinkorn die spätere Weiterverarbeitung, insbesondere das Zentrifugieren, also die Trennung von Mutterlösung und Kristallisat. Darüber hinaus vergrößert sich durch den aufgrund der Feinkristalle entstehenden Zuckerstaub die Gefahr von Staubexplosionen. Man möchte aus diesen Gründen daher nach Möglichkeit die Bildung dieser Primärkeime und Sekundärkeime vermeiden.

Primärkeime und Sekundärkeime der vorbeschriebenen Art werden im Nachfolgenden kurz als Kristallkeime zusammengefasst.

Zur Vermeidung der Bildung derartiger Kristallkeime hat es verschiedene Ansätze gegeben. Im Bereich der Zuckerindustrie wird bei den Kristallisationsprozessen auf eine spezielle Prozesssteuerung gesetzt, für die jeweils eine bestimmte Führungsgröße verwendet wird.

So wird beispielsweise in der DE 23 11 231 C3 und der DE 34 20 001 A1 vorgeschlagen, als Führungsgröße die Magmaviskosität zu verwenden. Alternativ schlagen K. E. Austmeyer und T. Frankenfeld "Die radiometrisch erfasste Dichte als Messgröße für den Kochprozess", in Zuckerindustrie 110 (1985) 2, Seiten 122 bis 130, die Magmadichte als Führungsgröße vor. In beiden Fällen wird mittels der Führungsgröße zur Charakterisierung des Gesamttrockensubstanzgehalts nach empirischen Vorgaben der Kristallisationsprozess so gesteuert, dass im Ergebnis bei der Kühlungs- beziehungsweise Verdampfungskristallisation der Keimbildungsprozess nicht zum Tragen kommt, also eine keimbildungskritische Übersättigung vermieden wird. Dies wird als sogenanntes "Best Practice Konzept" bezeichnet.

Die Begriffe "Konzentration" und "Trockensubstanzgehalt" stellen beide Gehaltsangaben dar. Unter einer Konzentration wird hier insbesondere die Massenkonzentration verstanden. Diese beschreibt die Masse der gelösten Stoffe bezogen auf das Gesamtlösungsvolumen. In Löslichkeitsdiagrammen wird üblicherweise von Konzentrationen gesprochen.

Insbesondere im Zuckerbereich wird eine andere Größe bevorzugt zur Beschreibung einer Gehaltsangabe herangezogen, nämlich die Trockensubstanz, vielfach als TS abgekürzt. Der Trockensubstanzgehalt ist ein Massengehalt. Er beschreibt die Masse der gelösten Feststoffe bezogen auf die Gesamtlösungsmasse. Dies ist für viele zuckertechnische Berechnungen von Vorteil.

Ein Verfahren und eine Vorrichtung zur kontinuierlichen Zuckerkristallisation ist beispielsweise aus der EP 0 370 365 A2 bekannt. Das dort beschriebene Verfahren und die dort beschriebene Vorrichtung arbeiten mit horizontal oder vertikal angeordneten Kristallisationskammern, die untereinander mit Rohrleitungen verbunden sind und Leitbleche aufweisen. Die Leitbleche bilden mäanderförmige Strömungswege entsprechend der Temperatur bzw. des Vakuums. Zur Kristallkeimbildung wird eine sehr geringe Menge Magma mit neu gebildeten sehr kleinen Kristallen bzw. Kristallkeimen in eine übersättigte Zuckerlösung zurückgeführt und mit dieser vermischt. Dadurch soll eine Sekundärkeimbildung induziert werden. Die Übersättigung wird durch Kühlung vergrößert und damit die Kristallkeimbildung verstärkt oder durch Erwärmung reduziert oder abgebrochen. Die Überwachung erfolgt mit Hilfe von Trübungsmessungen.

Eine kritische Auseinandersetzung mit den zur Führungsgröße vorgeschlagenen Werten im Zuckerbereich wird von L. Rozsa "On-line monitoring and control of supersaturation and other massecuite parameters in vacuum pans: A control engineering approach", in: International Sugar Journal, Vol. CXIII, Ausgabe Nr. 1356 (2011), Seiten 853 bis 862, gegeben.

In der jüngeren Literatur sind nicht nur Möglichkeiten für eine Prozesssteuerung, sondern auch Beispiele für Prozessregelungen beschrieben. Die Übersättigung ist bei diesen Beispielen eine rechnerische Größe, die auf bestimmten Vorgaben wie etwa der Löslichkeitskurve und anfänglichen Lösungsreinheit basiert. Auch Daten für die keimbildungskritische Übersättigung müssen vorgegeben werden.

So schlägt beispielsweise die EP 2 778 238 A2 vor, die Übersättigung in der Mutterlösung auf einen ganz bestimmten Größenbereich zu beschränken. L. Rozsa schlägt eine Prozessregelung mit on-line Verfolgung und Kontrolle der Übersättigung vor. Die erwähnten Vorgaben sind dabei erforderlich.

Alle Vorschläge aus dem Stand der Technik haben daher den Nachteil, dass stets eine Vorgabe einer keimbildungskritischen Übersättigung für den Kristallisationsprozess erfolgen muss.

In dem Firmenprospekt "Kristallisationsüberwachung" der Sensotech GmbH vom März 2015 wird eine Inline-Analysenmesstechnik vorgeschlagen, bei der eine Überwachung eines Kristallisationsvorganges erfolgt. Dabei geht es um großtechnische Kristallisationsprozesse, bei denen vor Durchführung des Kristallisationsprozesses exakt bekannt ist, welche Substanz sich in einem Kristallisationsapparat befindet und wie sich in Abhängigkeit von der Temperatur dieser Substanz die Schallgeschwindigkeit und die Konzentration verhalten. Gedacht ist dabei an vergleichsweise reine Salzlösungen, bei denen mithin vor Durchführung eines Kristallisationsvorganges die Werte der zugehörigen Sättigungskurve bei einem Kristallisationsvorgang exakt bekannt sind. Dadurch wird es möglich, während eines Kristallisationsvorganges durch Messung eines Parameters festzustellen, ob sich die Lösung im Kristallisationsapparat im metastabilen Bereich befindet beziehungsweise wie weit diese Lösung von der Sättigungskurve entfernt ist, wenn zuvor eine entsprechende Kalibrierung stattgefunden hat.

Diese Vorgehensweise ist zu kristallisierenden Lösungen geeignet, bei denen bereits vor dem Kristallisationsvorgang recht präzise Informationen vorliegen, wie es bei vielen vergleichsweise reineren Salzlösungen der Fall ist. Für die Kristallisation von Zucker ist dieses Vorgehen jedoch nicht anwendbar. Die Eigenschaften der Mutterlösung schwanken dabei von einer Charge zur nächsten und sind praktisch auch nicht vorherzusehen. Es gibt viele Fremdstoffe und organische Verunreinigungen in derartigen Mutterlösungen, sodass es nicht möglich ist, die für eine Vorhersage erforderlichen Annahmen zu treffen.

Ebenfalls mit der Kristallisation von Salzlösungen, insbesondere von Kalisalzlösungen, beschäftigt sich die DE 38 31 305 C2, die dafür eine Kühlkristallisation vorschlägt. Auch in diesem Konzept wird versucht, ein weitgehend einheitliches Kristallisat zu erzielen. Ein weiterer Vorschlag ist aus der EP 0 945 158 B1 bekannt, bei dem eine Kühlkristallisation eingesetzt wird, um eine möglichst gleichmäßige Teilchengrößenverteilung zu erhalten.

Die physikalischen und chemischen Eigenschaften der Mutterlösungen sind jedoch in vielen Fällen wie oben erwähnt sehr unterschiedlich. Sie sind abhängig von den äußeren Randbedingungen, von der Qualität oder auch der Art der vorbereitenden Schritte für die Herstellung der Mutterlösung. Der Verfahrensablauf selbst führt auch dazu, dass sich die Bedingungen innerhalb eines Kristallisationsapparates ändern, während das Verfahren läuft. Es gibt daher eine Reihe von empirischen und auch theoretischen Modellüberlegungen, wie die Kristallbildung erfolgt, welche Randbedingungen zu einem bestimmten Zeitpunkt in einem Kristallisationsbehälter vorliegen und wie man die schwierige Entscheidung treffen sollte, bei welchen Temperaturen und Konzentrationen das Verfahren innerhalb des Kristallisationsbehälters ablaufen soll.

Man hat schon erkannt, dass dann, wenn die Konzentration sehr hoch wird, mithin der Grad der Übersättigung steigt, die Tendenz in der Mutterlösung zunimmt, ungewünschte Kristallkeime zu bilden. Man versucht also, nach Möglichkeit mit Werten zu arbeiten, die ganz knapp oberhalb der auch als Sättigungskurve bezeichneten Grenze der Übersättigung zur Untersättigung liegen. Dadurch wird auch wirklich recht zuverlässig die Bildung von Kristallkeimen vermieden. Natürlich muss man versuchen, diese Randbedingung der Übersättigung möglichst genau einzuhalten beziehungsweise auf jeden Fall die Sättigungskurve zu überschreiten, aber eben möglichst nur geringfügig zu überschreiten.

Diese Vorgehensweise ist zwar erfolgreich, aber letztlich für den Fachmann unbefriedigend und lässt Möglichkeiten für eine Verbesserung zu.

Aufgabe der vorliegenden Erfindung ist es daher, ein Verfahren zur Gewinnung von Kristallen aus einer Mutterlösung vorzuschlagen, bei dem auch bei Zucker und anderen, aus nicht oder wenig reinen Mutterlösungen kristallisierten Stoffen die Verfahrensschritte eine raschere Kristallisation mit möglichst geringer Bildung von Kristallkeimen ermöglichen.

Eine weitere Aufgabe besteht darin, einen zur Durchführung des Verfahrens geeigneten Kristallisationsapparat vorzuschlagen.

Die erstgenannte Aufgabe wird bei einem gattungsgemäßen Verfahren mittels der Erfindung dadurch gelöst, dass während der kontinuierlichen Prozessregelung und des Verlaufs des Verfahrens in der Mutterlösung aktuell mittels Sensoren Daten erfasst werden, dass aus diesen Daten während des Verlaufs des Verfahrens eine Ermittlung der Lage der Grenze (M) der Bildung von Kristallkeimen als Wert der Konzentration (c) und der Temperatur (ϑ) erfolgt, dass die Ermittlung der Lage der Grenze (M) der Bildung von Keimen mittels iterativer Annäherung erfolgt, und dass diese aktuelle ermittelte

Lage der Grenze (M) der Bildung von Kristallkeimen für die Prozessregelung der Kristallisation herangezogen wird.

Für den Fachmann unerwartet, wird auf diese Weise tatsächlich eine Verbesserung der Verfahrensführung möglich. Anstelle der bisherigen Überlegungen und komplizierten Modellrechnungen, die eine möglichst genaue und präzise Erfassung der Grenze zwischen Übersättigung und Untersättigung in den Mittelpunkt gestellt haben, von der dann eine geschätzte und möglichst geringe Abweichung in den Übersättigungsbereich zugelassen wurde, wird jetzt ganz gezielt eine Ermittlung von einer Grenze vorgenommen, die bisher noch gar nicht in die näheren Betrachtungen einbezogen worden war.

Es bildet sich nämlich oberhalb der Sättigungskurve, also der Grenze von Übersättigung zu Untersättigung, ein metastabiler Bereich mit Werten für die Konzentration der Mutterlösung und die Temperatur aus, in dem noch keine Kristallkeime gebildet werden, da die Randbedingungen für eine Keimbildung noch nicht vorliegen. In diesem Bereich kann also aus physikalischen Gründen lediglich ein Wachstum von bereits vorhandenen Kristallkeimen, noch nicht jedoch eine Bildung neuer Kristallkeime erfolgen.

Interessant ist dabei, dass mit zunehmendem Abstand von der Grenze zwischen Untersättigung und Übersättigung, also mit zunehmender Konzentration, die Geschwindigkeit der Vergrößerung der vorhandenen Kristalle, die aus den ursprünglichen Saatkristallen entstehen, zunimmt. Dies ist verständlich, denn durch die zunehmende Übersättigung stehen mehr Zuckermoleküle bei der Kristallbildung zur Verfügung.

Es gibt also eine Zone, die gerade noch keine Bildung von Kristallkeimen ermöglicht, dafür aber doch schon ein schnelleres Wachstum der Zuckerkristalle verglichen mit dem Gebiet unmittelbar oberhalb der Sättigungskurve. Diese Zone besitzt schon einen gewissen Abstand von der Sättigungskurve, also der Grenze zur Untersättigung. Dieser Abstand ist jedoch noch nicht allzu groß. Durch die relativ exakte Bestimmung der Lage dieser Zone können nun die Prozessregelungen so erfolgen, dass gerade dieser Bereich angefahren wird und so die Gewinnung der Zuckerkristalle beschleunigt wird, ohne die ungewünschten Nebenwirkungen zu erzielen.

Der metastabile Bereich oberhalb der Sättigungskurve, in dem noch keine Neubildung von Kristallkeimen erfolgt, besitzt also neben der Sättigungskurve selbst, die hinsichtlich der Konzentration die Untergrenze des metastabilen Bereichs bildet, auch eine Obergrenze. Während im Stand der Technik in einem Teil dieses Gebietes gearbeitet wurde, der relativ dicht an der Sättigungskurve liegt und bisher auch liegen muss, wird erfindungsgemäß stattdessen in einem Teilgebiet beziehungsweise einer Zone gearbeitet, die der Obergrenze der metastabilen Zone möglichst benachbart ist.

In dieser nunmehr genutzten Zone innerhalb des metastabilen Bereichs ist eine Bildung von Kristallkeimen noch nahezu ausgeschlossen, dafür aber das Kristallwachstum bereits deutlich beschleunigt.

Die Sensoren, die erfindungsgemäß eingesetzt werden, sind bevorzugt Sensoren für optische Signale. Alternativ oder auch zusätzlich können auch Sensoren für Ultraschall, Radar und Mikrowellen und auch andere Messgrößen eingesetzt werden.

Ein besonderer Vorteil der Erfindung liegt darin, dass sie erstmals eine sensorisch zugängliche on-line Bestimmung von kritischen Übersättigungszuständen ermöglicht und daraus auch regelungstechnisch Folgerungen für eine Verbesserung der Verfahrensführung zieht.

Besonders bevorzugt ist, wenn die Kristalle Kohlenhydrate oder Zuckeralkohole sind. Auf diesem technischen Gebiet ist eine besonders interessante wirtschaftliche Verwertung des Verfahrens möglich.

Vorteilhaft ist es, wenn das optische Signal durch Wechselwirkung von elektromagnetischer Strahlung mit den Kristallkeimen erzeugt wird und insbesondere als Trübung erfasst wird.

Interessant ist dabei nicht nur das Gesamtsignal, aus dem Keimbildung erkennbar ist, sondern auch das Differenzsignal aus Kristallen als Hintergrundsignal und zusätzlichen Kristallkeimen. Auch die Ableitung des Signals kann interessante Informationen liefern. Unterschiedlichste Verarbeitungen der so gewonnenen optischen Signale sind möglich und können als regelungstechnisch verwertbare Bestandteile des optischen Signals zur Verbesserung des Verfahrens eingesetzt werden.

Ferner ist es bevorzugt, wenn die Ermittlung der Lage der Grenze (M) der Bildung von Kristallkeimen mittels einer Streulichtmessung als Trübung, einer Reflektionsmessung, insbesondere mittels Laser in Form einer fokussierten Laserrückstreuung (fachsprachlich focused beam reflectance measurement, abgekürzt FBRM) oder mittels bildgebender Verfahren, insbesondere mittels Mikroskopen, online im Kristallisationsapparat erfolgt.

Diese prozessanalytischen Werkzeuge haben sich bei der Bestimmung der Grenze des metastabilen Bereiches besonders bewährt. Da bei der Messung der Trübung die Streulichtintensität und die Streulichtrichtung nicht nur von der Konzentration und der Größenverteilung der Partikel abhängen, sondern auch von der Form, der Oberflächenstruktur und den optischen Parametern, unter Anderem dem Brechungsindex der Partikel, wird in dieser bevorzugten Ausführungsform des Verfahrens auch eine Unterscheidung verschiedener Kristallisate in bestimmten Grenzen möglich.

Mit der Erfindung wird die Keimbildungsgrenze im industriellen Kristallisationsprozess von Kohlenhydraten und Zuckeralkoholen periodisch bestimmt. Es wird möglich, dies in einem selbstlernenden Verfahren für die Regelung der Kristallisation zu nutzen. Die Keimbildungsgrenze stellt zugleich die Obergrenze der metastabilen Zone dar. Die Messungen können unter realen Bedingungen im jeweiligen Kristallisationsapparat mit den ausgewählten und verfügbaren Sensoren vorgenommen werden.

Durch die Erfindung kann den individuellen und auch zeitlich variablen Systemverhältnissen des Kristallisationsapparates besser Rechnung getragen werden. Dies gilt für die konstruktiven und prozesstechnischen Ausführungen ebenso wie für die Qualität von verschiedenen kohlenhydrathaltigen Rohstoffen, beispielsweise von Zuckerrüben und Zuckerrohr.

Die bisher erforderlichen Zahlenwerte der Übersättigung und die Kenntnis der von der Lösungsreinheit abhängigen Lage der Sättigungskurve sind nicht mehr erforderlich. Auch driftende Reinheiten oder Nichtzuckerkompositionen der Mutterlösung während der Kampagne stellen keine Probleme mehr dar, sondern können als Einflussfaktoren auf die Keimbildungsgrenze automatisch berücksichtigt werden.

Die Keimbildungsgrenze ist keine Systemkonstante. Sie wird in regelmäßigen Abständen validiert und anhand der Validierung daraufhin die Kristallisationsregelung angepasst. Dadurch kann der Kristallisationsprozess immer optimal ausgeführt werden. Dies bedeutet einen immer aktuellen und insbesondere optimalen Arbeitspunkt typischerweise dicht unterhalb der Obergrenze der metastabilen Zone.

Dies ist besonders relevant hinsichtlich des sehr wichtigen Saatpunkts, da hier der Kristallisationsprozess regelungstechnisch leicht ins instabile Gebiet laufen kann. Der Saatpunkt ist derjenige Punkt im Diagramm von Konzentration und Temperatur, bei dem die Saatkristalle ausgelegt werden.

Das erfindungsgemäße Verfahren besitzt auch den Vorteil, dass auf eine zur Zeit eingesetzte aufwendige und teure Mikrowellenmessung zur Bestimmung des Magma-Trockensubstanzgehalts verzichtet werden kann. Stattdessen wird eine preisgünstige und weniger aufwendige erfindungsgemäße Kombination herangezogen, um die Grenze der Keimbildung sowie den dazugehörenden Mutterlösungs- Trockensubstanzgehalt zu bestimmen und zu regeln. In einer bevorzugten Ausführungsform geschieht dies durch eine Kombination aus einem Trübungssensor und einem Prozessrefraktometer.

Man erreicht mit dieser Erfindung eine optimale Raum-Zeit-Ausbeute der Kristallisationsapparate. Die durchgeführten Prozesse werden wirtschaftlicher.

Die mit der Erfindung erzielte Verbesserung der Kristallqualität drückt sich aus in einer verbesserten Kristallverteilung, bei dem nicht mehr der sonst in Kauf zu nehmende Anteil an Feinkorn, also an Sekundärkristallen entstehend aus Sekundärkeimen anfällt. Damit einher geht eine Verbesserung der Kristallabtrennung in Zentrifugen mit erhöhter Produktausbeute.

Die Erfindung findet bevorzugt bei einem Verfahren Anwendung, bei dem die Mutterlösung chargenweise in den Kristallisationsapparat gegeben wird. Möglich ist aber auch eine kontinuierliche Verfahrensführung.

In einer bevorzugten Ausführungsform des Verfahrens können diese Möglichkeiten dadurch genutzt werden, dass für die Ermittlung der Lage der Grenze der Bildung von Kristallkeimen optische und andere Signale genutzt werden, die im Hinblick auf die Bildung von Kristallkeimen
a) in einem diskontinuierlichen Betrieb während einer Charge bewertet werden, wobei das Bewertungsergebnis auf die Regelgrößen während einer Verarbeitung der Charge oder auf die nachfolgende Kristallisationscharge wirkt, beziehungsweise
b) in einem kontinuierlichen Betrieb über einen Zeitabschnitt bewertet werden, wobei das Bewertungsergebnis auf die Regelgrößen für einen nachfolgenden Zeitabschnitt wirkt.

Beide Betriebsarten ermöglichen auf diese Weise eine Optimierung der Gewinnung von Kristallen aus einer Mutterlösung.

Weitere Verbesserungen werden möglich, wenn die optischen und anderen Signale als Funktion der Zeit aufgezeichnet und bewertet werden.

Dabei wird sinnvollerweise so vorgegangen, dass die Art der optischen und anderen Signale so ausgewählt wird, dass sie für die Bildung von Kristallkeimen von Kohlenhydraten oder Zuckeralkoholen charakteristisch sind.

Eine Auswertung der optischen und anderen Signale und ihres zeitlichen Verlaufs kann in Form des erfindungsgemäßen Verfahrens auch dazu eingesetzt werden, dass ein Rückschluss auf den Zeitpunkt der Keimbildung und/oder die Rate der Keimbildung vorgenommen wird.

Die Ermittlung der Lage der Grenze der Bildung von Keimen wird mittels iterativer Annäherung vorgenommen.

Bevorzugt ist es, wenn das Verfahren zusätzlich auch dafür eingesetzt wird, den Erfolg einer Abreinigung von Kristallisationsapparaten durch das sogenannte Auskochen, welches periodisch erforderlich ist, um Inkrustationen abzubauen beziehungsweise zu vermeiden, zeitlich zu verfolgen und zu bewerten. Insbesondere kann dadurch erkennbar gemacht werden, wann der Abreinigungsprozess in einem Kristallisationsapparat erforderlich ist und daher vorgenommen werden sollte.

Ein für die Lösung der als zweites genannten Aufgabe geeigneter Kristallisationsapparat, der für die Durchführung des erfindungsgemäßen Verfahrens geeignet ist, zeichnet sich durch Sensoren zur Ermittlung der Lage der Grenze der Bildung von Kristallkeimen aus.

Dabei wird es bevorzugt, wenn der Sensor sich in einem Bereich des Apparates befindet, der nicht durch Blasenbildung gestört wird.

Weiter ist es bevorzugt, wenn der oder die Sensoren unterhalb einer Heizkammer angeordnet werden.

Weitere bevorzugte Merkmale der Erfindung sind in den Unteransprüchen sowie in der folgenden Figurenbeschreibung näher angegeben.

Im Folgenden wird die Erfindung anhand der Zeichnung näher erläutert. Es zeigen:
- **Figur 1**: eine schematische Darstellung der Grenzkurven für gesäte Kristallisationsprozesse in einem Kristallisationsapparat;
- **Figur 2**: eine schematische Darstellung der Zustände bei einer Verdampfungskristallisation im Einchargenprozess;
- **Figur 3**: eine schematische Darstellung der Zustände bei einer Verdampfungskristallisation im Mehrchargenprozess;
- **Figur 4**: eine schematische Darstellung der Zustände bei einer Kühlungskristallisation in einem Einchargenprozess; und
- **Figur 5**: eine schematische Darstellung der Zustände bei einer Kühlungskristallisation in einem Mehrchargenprozess.

In einem Kristallisationsprozess in einem Kristallisationsapparat werden in eine Mutterlösung gezielt an einem Saatpunkt Kristallkeime eingebracht, aus welchen Kristalle der gewünschten Art wachsen sollen.

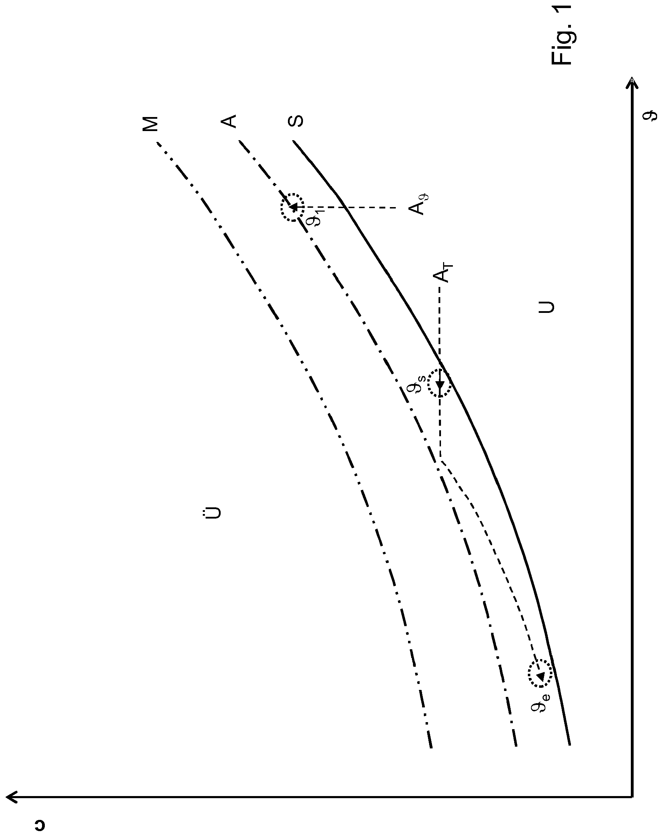

In der **Figur 1** ist grundsätzlich aufgetragen, wie sich die Werte für die Mutterlösung für einen Kristallisationsprozess in einem Kristallisationsapparat verhalten. Hierzu ist für die Mutterlösung nach rechts eine Temperatur ϑ und nach oben eine Konzentration c aufgetragen. Man sieht, dass sich bei hohen Temperaturen und niedriger Konzentration eine Untersättigung ausbildet, im Bereich U, in dem vorhandene Kristalle sich auflösen. Die Mutterlösung ist hier also flüssig und eine Bildung von festen Zuckerkristallen ist nicht möglich.

Bei einer hohen Konzentration c und niedrigeren Temperaturen ϑ entsteht stattdessen ein Übersättigungsbereich Ü. Hier wachsen vorhandene Zuckerkristalle durch die hohe Konzentration in ihrer Umgebung und darüber hinaus ist auch eine Feinkornbildung möglich. Dieser Bereich ist instabil, da die Mutterlösung die Tendenz zur Kristallisation hat.

Zwischen dem Untersättigungsbereich U und dem Übersättigungsbereich Ü gibt es als Grenze eine Sättigungskurve S.

Deutlich oberhalb der Sättigungskurve S gibt es darüber hinaus eine metastabile Grenze M für eine Kristallkeimbildung. In dem Bereich zwischen der Sättigungskurve S und der metastabilen Grenze M können aufgrund der vorhandenen Übersättigung bereits vorhandene Saatkristalle wachsen, es können sich jedoch keine neuen Zuckerkristalle bilden, da die für die Keimbildung erforderlichen Randbedingungen nicht ausreichen.

Im Stand der Technik bestand die Tendenz, die Bildung von Kristallkeimen möglichst zu vermeiden und zwar dadurch, dass man zwar oberhalb der Sättigungskurve S zu bleiben hatte, um überhaupt ein Wachstum von Zuckerkristallen zu ermöglichen, sich jedoch möglichst dicht an dieser Sättigungskurve S hielt. Eine empirisch ermittelte Arbeitskurve A durfte nicht überschritten werden oder war jedenfalls möglichst eng einzuhalten.

Auf dieser Arbeitskurve A liegt beispielsweise auch ein Arbeitspunkt ϑ₁ für die Verdampfungskristallisation. Der Saatpunkt ist hier nicht dargestellt.

Eingezeichnet ist ferner eine typische Arbeitskurve A_{T} für eine Kühlungskristallisation. Der Kristallapparat wird durch Senkung der Temperatur, erkennbar an einer horizontalen Linie, über die Sättigungskurve S und den dort in der Nähe liegenden Startpunkt mit einer Starttemperatur ϑ_{S} gefahren und zwar geschätzt durch kontinuierliche Senkung der Temperatur bis kurz vor Erreichen der aus empirisch ermittelten Werten gewonnenen Arbeitskurve A. Dann wird die Konzentration c ebenfalls abgesenkt, damit diese Arbeitskurve A nicht überschritten wird. Diese Senkung der Konzentration c entsteht durch die Verarmung der Mutterlösung durch Kristallisation. Das Verfahren wird dann bei einer Temperatur ϑₑ beendet.

Die Arbeitskurve A liegt deutlich unterhalb der metastabilen Grenze M, um die Entstehung von Kristallkeimen beziehungsweise im Ergebnis von Feinkorn zuverlässig zu vermeiden.

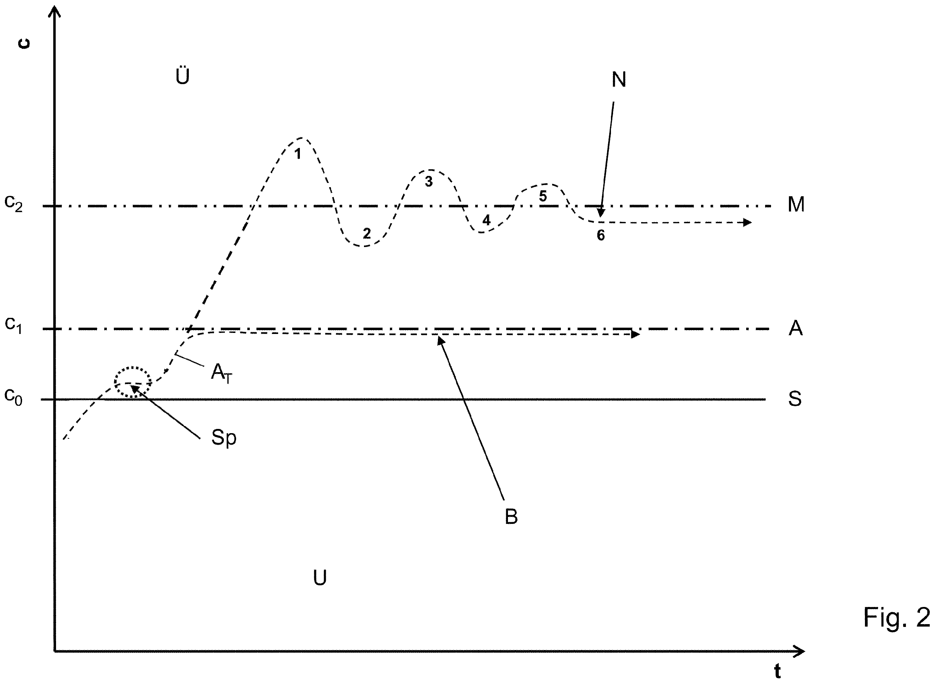

In der **Figur 2** sind jetzt die Verhältnisse in ähnlicher Form wiedergegeben, wobei hier nach rechts die Zeit t während des Verfahrensablaufes und nach oben wiederum die Konzentration c angegeben ist.

Betrachtet man sich den Lauf des Verfahrens A_{T}, so ist dieser zunächst in seinen Werten identisch und führt in dieser Darstellung links zunächst über die Sättigungskurve S mit der Konzentration c₀ zum Saatpunkt Sp. Von dort steigt die Konzentration mit der Zeit weiter an, wie dies auch in Figur 1 zu erkennen ist, bis die Arbeitskurve A mit der Konzentration c₁ ganz erreicht ist. Dann biegt herkömmlich die Kurve A_{T} ab und verläuft knapp unter der Arbeitskurve A, die mithin praktisch die bisherige Grenzkonzentration B in der Übersättigung bildet.

Bei einem erfindungsgemäßen Verfahren erfolgt dies nicht, sondern stattdessen steigt die Kurve über die Arbeitskurve A mit der Konzentration c₁ weiter nach oben. Im Laufe der Zeit wird schließlich die Konzentration c₂ überschritten. Jetzt stellen Sensoren (nicht dargestellt) das Entstehen von Kristallkeimen fest und ermitteln dadurch, dass offensichtlich die metastabile Grenze M für die Bildung von Kristallkeimen überschritten worden ist. Diese Erkenntnis wird sofort dazu genutzt, nunmehr in einem nächsten Schritt die Konzentration zu senken, bis sie wieder soweit abgefallen ist, dass keine Bildung von Kristallkeimen mehr beobachtet werden kann. Dies ist zwischen der metastabilen Grenze M und dem mit "2" bezeichneten Moment in der Arbeitskurve A der Fall. Regelungstechnisch wird jetzt in dem mit "2" bezeichneten Moment das Senken der Konzentration beendet. Jetzt kann das Verfahren weiterlaufen, bis die Konzentration c₂ erneut überschritten wird.

Dieser Vorgang wird dann in dieser Ausführungsform des erfindungsgemäßen Verfahrens innerhalb einer einzigen Charge weiter iterativ verfolgt, bis die jeweiligen Messungen recht deutlich gezeigt haben, wo denn die metastabile Grenze M für die Bildung von Kristallkeimen tatsächlich liegt.

In der Darstellung wird angenommen, dass diese Erkenntnis im iterativen Schritt "6" erreicht worden ist und von da an wird dieser als nahezu optimal erkannte Wert für die Konzentration c beibehalten, sodass sich eine optimierte Grenzkonzentration N für die Übersättigung für den weiteren Verfahrensablauf bildet.

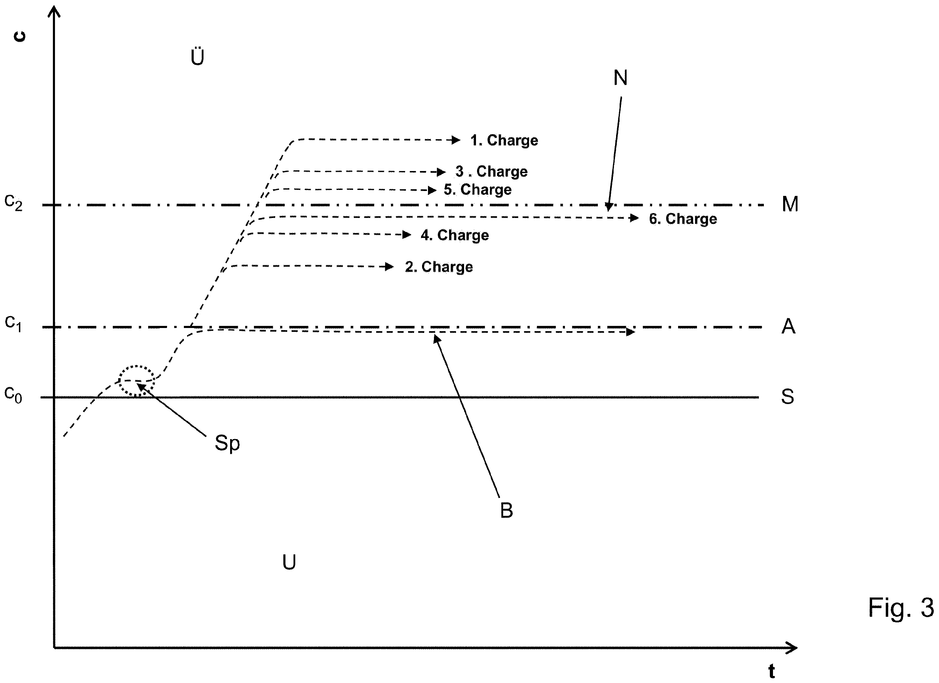

In der **Figur 3** wird in ähnlicher Form nun eine iterative Abfolge bei einer Verwendung für mehrere Chargen nacheinander gezeigt. Das bisherige Verhalten wäre wiederum das, das auch die bisherige Grenzkonzentration B knapp unterhalb der Arbeitskurve A mit der Konzentration c₁ aufweist.

Hier wird nun jeweils innerhalb einer Charge ein bestimmter Wert angenommen. Die erste Charge wird also nicht wie in der Figur 2 wieder auf die metastabile Grenze M reduziert, sondern bleibt nach Erreichen eines bestimmten Wertes und der Erkenntnis, dass man die metastabile Grenze M mit der Konzentration c₂ überschritten hat, konstant.

Bei einer zweiten Charge wird dann bei einem deutlich tieferen Wert abgebrochen und die Erkenntnis, dass noch gar kein Kristallkeim gebildet worden ist, für einen dann wieder höheren Wert der dritten Charge genutzt, und so fort.

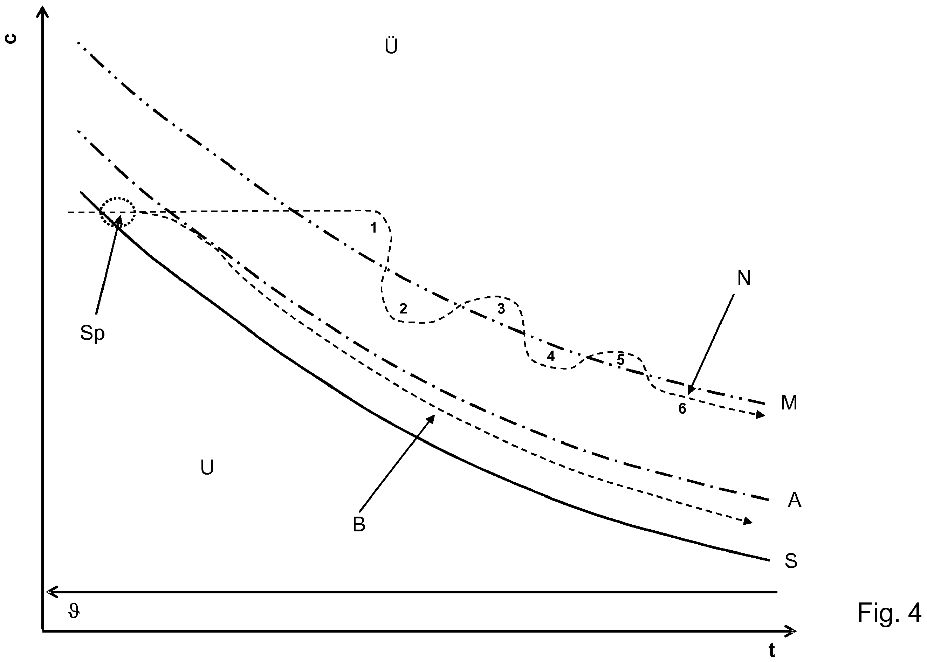

In der **Figur 4** wird nun eine iterative Abfolge von Prozessschritten wiederum in einer einzigen Charge schematisch dargestellt, hier für eine Kühlungskristallisation.

Im Unterschied zur Darstellung in Figuren 2 und 3 läuft hier also mit der Zeit t zugleich die Temperatur ϑ zu abnehmenden Werten. Die Temperatur nimmt also nach rechts ab. Hier bleibt mit der Zeit die Konzentration c nicht konstant; man sieht hier aber die gleichen Kurven und Werte eingetragen, also den Untersättigungsbereich U, den Übersättigungsbereich Ü, die diese beiden Bereiche trennende Sättigungskurve S und die metastabile Grenze M für die Bildung von Kristallkeimen, die sich in einigem Abstand oberhalb von der Sättigungskurve S befindet.

Auch hier wird eine Arbeitskurve eingezeichnet, die iterativ sich an diese metastabile Grenze M der Bildung von Kristallkeimen innerhalb einer einzigen Charge annähert.

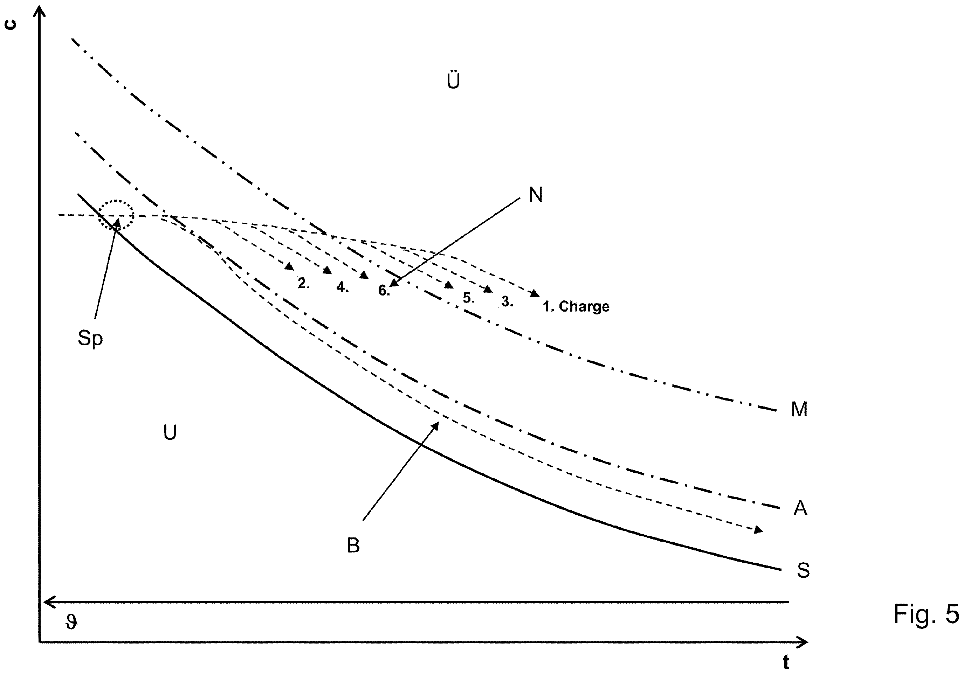

In der **Figur 5** findet eine Kühlungskristallisation nun in einem Mehrchargenprozess statt und es ergibt sich in ähnlicher Form wie in der Figur 3 jetzt eine Erkenntnisgewinnung jeweils von Charge zu Charge.

Man kann hierzu die Kühlrate der Mutterlösung sukzessiv von Charge zu Charge höhersetzen, bis die Keimbildungsgrenze M erreicht oder überschritten wird. Die Kühlrate der Mutterlösung kann nach Überschreiten der Keimbildungsgrenze M und Erkennen dieser Überschreitung wieder etwas abgesenkt werden, sodass bei der nächsten Charge gerade keine Keimbildung mehr beobachtet wird. Man kann durch diesen iterativen Prozess sich der oberen Grenze der metastabilen Zone als Arbeitspunkt annähern. Dies ist insbesondere am Saatpunkt Sp von Interesse, da hier die Gefahr besteht, dass der Prozess regelungstechnisch ins instabile Gebiet läuft, und dieser Gefahr gezielt entgegengewirkt werden kann.

Die zu diesem Arbeitspunkt gehörende Kühlrate der Mutterlösung dient als Sollwertvorgabe für den Prozess. Sie sollte im Verlauf der Charge nachgeführt werden.

Für die Bestimmung der Lage der metastabilen Grenze M können verschiedene ausreichend empfindliche prozessanalytische Werkzeuge eingesetzt werden, beispielsweise Turbidimeter, eine Messung fokussierter Laserrückstreuung (FBRM) oder bildgebende Verfahren, beispielsweise mittels Prozessmikroskopen.

Mit einem oder mehreren Sensoren zur Bestimmung der Keimbildungsgrenze M kann im Bereich der Zuckerkristallisation ein selbstlernender und sich optimierender Regelkreis aufgebaut werden, der die bekannten Regelkonzepte für eine Kristallisationscharge verbessert.

In der Praxis würde man im Zuckerhaus einer Fabrik für eine Produktstation, beispielsweise für Weißzucker mit mehreren diskontinuierlichen Kristallisationsapparaten nur einen Apparat derartig ausrüsten. Sofern die parallelarbeitenden Kristallisationsapparate baugleich sind, kann der aufgefundene Arbeitspunkt auf diese Apparate übertragen werden. Die Regelung dort kann dann mit den bekannten Konzepten beispielsweise unter Zuhilfenahme von Mutterlösungstrockensubstanzwerten erfolgen.

Die Trockensubstanzwerte der Mutterlösung können beispielsweise mittels eines Prozessrefraktometers verfolgt werden. Dabei sollte dieser iterative Prozess zur Bestimmung der metastabilen Grenze M periodisch wiederholt werden.

Das Prinzip ist sowohl auf die kontinuierliche und diskontinuierliche Verdampfungskristallisation wie auch die kontinuierliche und diskontinuierliche Kühlungskristallisation anwendbar.

### Bezugszeichenliste

- A: Arbeitskurve
- A_{T}: typische Arbeitskurve für eine Kühlungskristallisation
- A_{ϑ}: typische Arbeitskurve für die Verdampfungskristallisation für eine konstante Temperatur ϑ
- B: bisherige Grenzkonzentration für die Übersättigung
- c: Konzentration
- c₀: Konzentration am Sättigungspunkt
- c₁: Konzentration am Arbeitspunkt für die Verdampfungskristallisation
- c₂: Konzentration an der metastabilen Grenze für Kristallkeimbildung
- M: metastabile Grenze für Kristallkeimbildung
- N: neue, optimierte Arbeitskurve
- S: Sättigungskurve
- Sp: Saatpunkt
- t: Zeit
- U: Untersättigungsbereich
- Ü: instabiler Übersättigungsbereich
- ϑ: Temperatur
- ϑ₁: konstanter Temperaturwert
- ϑₛ: Starttemperatur von A_{T}
- ϑₑ: Endtemperatur von A_{T}

## Patentansprüche

1. Verfahren zur Gewinnung von Kristallen aus einer Mutterlösung,
bei dem Mutterlösung in einen Kristallisationsapparat gegeben wird,
bei dem durch Steuerung und/oder Regelung der Temperatur (ϑ) eine Übersättigung der Mutterlösung herbeigeführt wird,
bei dem Saatkristalle an einem Saatpunkt (Sp) der Mutterlösung hinzugefügt werden,
bei dem durch kontinuierliche Prozessregelung die Saatkristalle als Kristallkeime vergrößert und schließlich als Kristalle aus dem Verfahren entnommen werden und die Produktausbeute bilden,
bei dem der Bildung von Kristallkeimen in der Mutterlösung durch Schritte in der Prozessregelung entgegengewirkt wird,
**dadurch gekennzeichnet,**
**dass** während der kontinuierlichen Prozessregelung und des Verlaufs des Verfahrens in der Mutterlösung aktuell mittels Sensoren Daten erfasst werden, **dass** aus diesen Daten während des Verlaufs des Verfahrens eine Ermittlung der Lage der Grenze (M) der Bildung von Kristallkeimen als Wert der Konzentration (c) und der Temperatur (ϑ) erfolgt,
**dass** die Ermittlung der Lage der Grenze (M) der Bildung von Keimen mittels iterativer Annäherung erfolgt und
**dass** diese aktuelle ermittelte Lage der Grenze (M) der Bildung von Kristallkeimen für die Prozessregelung der Kristallisation herangezogen wird.

2. Verfahren nach Anspruch 1,
**dadurch gekennzeichnet,**
**dass** die Kristalle Kohlenhydrate oder Zuckeralkohole sind.

3. Verfahren nach Anspruch 1 oder 2,
**dadurch gekennzeichnet,**
**dass** die Mutterlösung diskontinuierlich chargenweise oder kontinuierlich in den Kristallisationsapparat gegeben wird.

4. Verfahren nach Anspruch 3,
**dadurch gekennzeichnet,**
**dass** für die Ermittlung der Lage der Grenze (M) der Bildung von Kristallkeimen optische Signale und/oder Signale betreffend Ultraschall, Radar und/oder Mikrowellen genutzt werden, die im Hinblick auf die Bildung von Kristallkeimen
**a)** in einem diskontinuierlichen Betrieb während einer Charge bewertet werden, wobei das Bewertungsergebnis auf die Regelgrößen während einer Verarbeitung der Charge oder auf die nachfolgende Kristallisationscharge wirkt, alternativ
**b)** in einem kontinuierlichen Betrieb über einen Zeitabschnitt bewertet werden, wobei das Bewertungsergebnis auf die Regelgrößen für einen nachfolgenden Zeitabschnitt wirkt.

5. Verfahren nach Anspruch 4,
**dadurch gekennzeichnet,**
**dass** die optischen Signale und/oder die Signale betreffend Ultraschall, Radar und/oder Mikrowellen als Funktion der Zeit aufgezeichnet und bewertet werden.

6. Verfahren nach Anspruch 4 oder 5,
**dadurch gekennzeichnet,**
**dass** die Art der optischen Signale und/oder die Signale betreffend Ultraschall, Radar und/oder Mikrowellen so ausgewählt wird, dass sie für die Bildung von Kristallkeimen von Kohlenhydraten oder Zuckeralkoholen charakteristisch sind.

7. Verfahren nach einem der Ansprüche 4 bis 6,
**dadurch gekennzeichnet,**
**dass** die Bewertung der optischen Signale und/oder der Signale betreffend Ultraschall, Radar und/oder Mikrowellen einschließlich gegebenenfalls ihres zeitlichen Verlaufs einen Rückschluss auf den Zeitpunkt der Keimbildung und/oder die Rate der Keimbildung erlaubt.

8. Verfahren nach einem der Ansprüche 4 bis 7,
**dadurch gekennzeichnet,**
**dass** die optischen Signale durch Wechselwirkung von elektromagnetischer Strahlung mit den Kristallkeimen erzeugt werden und insbesondere als Trübung erfasst werden.

9. Verfahren nach einem der vorstehenden Ansprüche,
**dadurch gekennzeichnet,**
**dass** die Ermittlung der Lage der Grenze (M) der Bildung von Kristallkeimen mittels einer Streulichtmessung als Trübung, einer Reflektionsmessung, insbesondere mittels Laser in Form einer fokussierten Laserrückstreuung (fachsprachlich focused beam reflectance measurement, abgekürzt FBRM) oder mittels bildgebender Verfahren, insbesondere mittels Mikroskopen, online im Kristallisationsapparat erfolgt.

10. Verfahren nach Anspruch 9,
**dadurch gekennzeichnet,**
**dass** die Streulichtmessung mittels eines Turbidimeters oder Nephleometers erfolgt, und/oder
**dass** die Streulichtmessung als Trübung unter verschiedenen Winkeln vorgenommen wird.

11. Verfahren nach einem der Ansprüche 3 bis 10,
**dadurch gekennzeichnet,**
**dass** das Bewertungsergebnis auf die Regelgrößen zusätzlich von parallel arbeitenden chargenweisen oder kontinuierlich arbeitenden Kristallisationsprozessen in gegebenenfalls anderen Kristallisationsapparaten übertragen wird.

12. Verfahren nach einem der vorstehenden Ansprüche,
**dadurch gekennzeichnet,**
**dass** zur Onlineregelung die Bewertungsergebnisse in einem selbstlernenden System genutzt werden.

13. Verfahren nach einem der Ansprüche 4 bis 12,
**dadurch gekennzeichnet,**
**dass** aus den ermittelten optischen Signalen und/oder die Signale betreffend Ultraschall, Radar und/oder Mikrowellen ein Abnehmen und/oder Verschwinden von Kristallen und/oder Kristallkeimen ermittelt wird.

14. Verfahren nach einem der vorstehenden Ansprüche,
**dadurch gekennzeichnet,**
**dass** aus den ermittelten Werten eine Bewertung der Abreinigungserfordernis des Kristallisationsapparates vorgenommen wird, insbesondere eine Feststellung, dass ein Abreinigungsprozess erforderlich ist und/oder eine Feststellung, dass ein Abreinigungsprozess als erfolgreich abgeschlossen angesehen werden kann.

15. Kristallisationsapparat zur Durchführung eines Verfahrens nach einem der Ansprüche 1 bis 14,
mit Sensoren zur Ermittlung der Lage der Grenze (M) der Bildung von Kristallkeimen.

16. Kristallisationsapparat nach Anspruch 15,
**dadurch gekennzeichnet,**
**dass** der oder die Sensoren in einem blasenfreien Bereich des Kristallisationsapparates angeordnet ist beziehungsweise sind.

17. Kristallisationsapparat nach Anspruch 15 oder 16,
**dadurch gekennzeichnet,**
**dass** eine Heizkammer vorgesehen ist, und
**dass** der oder die Sensoren unterhalb der Heizkammer angeordnet ist beziehungsweise sind.

18. Kristallisationsapparat nach einem der Ansprüche 15 bis 17,
**dadurch gekennzeichnet,**
**dass** die Sensoren optischen Sensoren und/oder Sensoren für Ultraschall, Radar und/oder Mikrowellen sind.

## Claims

1. A method for obtaining crystals from a mother solution,
in which mother solution is fed into a crystallisation device,
in which supersaturation of the mother solution is brought about by open and/or closed-loop control of the temperature (θ),
in which seed crystals are added to the mother solution at a seeding point (Sp),
in which the seed crystals are grown as crystal nuclei by continuous closed-loop process control and are finally removed from the method as crystals and form the product yield,
in which the formation of crystal nuclei in the mother solution is countered by steps in the closed-loop process control,
**characterised**
**in that,** during the continuous closed-loop process control and while the method is running, in the mother solution data are currently determined by sensors,
**in that** from these data the position of the limit (M) of the formation of crystal nuclei is determined while the method is running, as a value of the concentration (c) and the temperature (θ),
**in that** the position of the limit (M) of nucleation is determined using iterative approximation, and
**in that** this current determined position of the limit (M) of the formation of crystal nuclei is used as the basis for the closed-loop process control of the crystallisation.

2. A method according to Claim 1,
**characterised in that** the crystals are carbohydrates or sugar alcohols.

3. A method according to Claim 1 or 2,
**characterised in that** the mother solution is fed into the crystallisation device discontinuously in batches or continuously.

4. A method according to Claim 3,
**characterised in that** optical signals and/or signals relating to ultrasound, radar and/or microwaves are utilised for determining the position of the limit (M) of the formation of crystal nuclei, wherein in respect of the formation of crystal nuclei these signals
a) are evaluated in a discontinuous operation during a batch, wherein the result of evaluation has an effect on the closed-loop control variables during processing of the batch or on the subsequent crystallisation batch, or alternatively
b) are evaluated in a continuous operation over a period of time, wherein the result of evaluation has an effect on the closed-loop control variables for a subsequent period of time.

5. A method according to Claim 4,
**characterised in that** the optical signals and/or the signals relating to ultrasound, radar and/or microwaves are captured and evaluated as a function of time.

6. A method according to Claim 4 or 5,
**characterised in that** the type of optical signals and/or signals relating to ultrasound, radar and/or microwaves is selected such that they are characteristic of the formation of crystal nuclei of carbohydrates or sugar alcohols.

7. A method according to one of Claims 4 to 6,
**characterised in that** evaluation of the optical signals and/or the signals relating to ultrasound, radar and/or microwaves, including where appropriate their course over time, allows a conclusion to be drawn about the time of nucleation and/or the rate of nucleation.

8. A method according to one of Claims 4 to 7,
**characterised in that** the optical signals are generated by an interaction of electromagnetic radiation with the crystal nuclei and are in particular detected as turbidity.

9. A method according to one of the preceding claims,
**characterised in that** the position of the limit (M) of the formation of crystal nuclei is determined using a light scattering measurement as turbidity, a reflectance measurement, in particular by laser in the form of a focused beam reflectance measurement (abbreviated to FBRM) or using imaging methods, in particular using microscopes, online in the crystallisation device.

10. A method according to Claim 9,
**characterised**
**in that** the light scattering measurement is performed by means of a turbidity meter or nephelometer, and/or
**in that** the light scattering measurement is performed as turbidity at different angles.

11. A method according to one of Claims 3 to 10,
**characterised in that** the result of evaluation relating to the closed-loop control variables from parallel crystallisation processes operating in batches or continuously is in addition applied where appropriate to other crystallisation devices.

12. A method according to one of the preceding claims,
**characterised in that** the results of evaluation are utilised in a self-training system for the purpose of online closed-loop control.

13. A method according to one of Claims 4 to 12,
**characterised in that,** from the determined optical signals and/or the signals relating to ultrasound, radar and/or microwaves, the fact that crystals and/or crystal nuclei have diminished and/or disappeared is determined.

14. A method according to one of the preceding claims,
**characterised in that,** from the determined values, an evaluation of the cleaning required for the crystallisation device is performed, in particular establishing that a cleaning process is required and/or establishing that a cleaning process can be considered to have been successfully completed.

15. A crystallisation device for carrying out a method according to one of Claims 1 to 14,
having sensors for determining the position of the limit (M) of the formation of crystal nuclei.

16. A crystallisation device according to Claim 15,
**characterised in that** the sensor or sensors is or are arranged in a region of the crystallisation device that is free of bubbles.

17. A crystallisation device according to Claim 15 or 16,
**characterised**
**in that** a heating chamber is provided, and
**in that** the sensor or sensors is or are arranged below the heating chamber.

18. A crystallisation device according to one of Claims 15 to 17,
**characterised in that** the sensors are optical sensors and/or sensors for ultrasound, radar and/or microwaves.

## Revendications

1. Procédé d'obtention de cristaux à partir d'une solution-mère,
où la solution-mère est ajoutée dans un cristallisoir,
où une sursaturation de la solution-mère est entraînée par la commande et/ou la régulation de la température ( 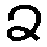 ),
où des cristaux d'ensemencement sont ajoutés à la solution-mère à un point d'ensemencement (Sp),
où les cristaux d'ensemencement se développent sous forme de germes cristallins par une régulation de processus continue et sont extraits finalement à partir du procédé sous forme de cristaux et forment le produit final,
où des étapes dans la régulation de processus permettent de contrecarrer la formation de germes cristallins dans la solution-mère,
**caractérisé en ce**
**que** des données sont détectées pendant la régulation de processus continue et au cours du procédé dans la solution-mère en temps réel au moyen de capteurs,
**qu'**une détermination de la position de la limite (M) de la formation de germes cristallins en tant que valeur de la concentration (c) et de la température ( 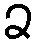 ) est effectuée à partir desdites données au cours du procédé,
**que** la détermination de la position de la limite (M) de la formation de germes est effectuée par approximation itérative, et
**que** ladite position déterminée en temps réel de la limite (M) de la formation de germes cristallins est prise en compte pour la régulation de processus de la cristallisation.

2. Procédé selon la revendication 1,
**caractérisé en ce**
**que** les cristaux sont des hydrates de carbone ou des alcools de sucre.

3. Procédé selon la revendication 1 ou 2,
**caractérisé en ce**
**que** la solution-mère est ajoutée en discontinu par lot ou en continu dans le cristallisoir.

4. Procédé selon la revendication 3,
**caractérisé en ce**
**que** sont utilisés pour la détermination de la position de la limite (M) de la formation de germes cristallins, des signaux optiques et/ou des signaux concernant les ultrasons, le radar et/ou les micro-ondes, qui, au regard de la formation de germes cristallins,
**a)** sont évalués lors d'un fonctionnement discontinu pendant l'ajout d'un lot, dans lequel le résultat de l'évaluation agit sur les grandeurs de régulation pendant un traitement du lot ou sur le lot de cristallisation qui suit, en variante
**b)** sont évalués lors d'un fonctionnement continu sur un laps de temps, dans lequel le résultat de l'évaluation agit sur les grandeurs de régulation pour un laps de temps qui suit.

5. Procédé selon la revendication 4,
**caractérisé en ce**
**que** les signaux optiques et/ou les signaux concernant les ultrasons, le radar et/ou les micro-ondes sont enregistrés et évalués en fonction du temps.

6. Procédé selon la revendication 4 ou 5,
**caractérisé en ce**
**que** le type des signaux optiques et/ou les signaux concernant les ultrasons, le radar et/ou les micro-ondes est choisi de telle sorte qu'ils sont propres à la formation de germes cristallins d'hydrates de carbone ou d'alcools de sucre.

7. Procédé selon l'une quelconque des revendications 4 à 6,
**caractérisé en ce**
**que** l'évaluation des signaux optiques et/ou des signaux concernant les ultrasons, le radar et/ou les micro-ondes y compris éventuellement leur évolution dans le temps permet de tirer une conclusion sur le moment de la formation de germes et/ou la vitesse de la formation de germes.

8. Procédé selon l'une quelconque des revendications 4 à 7,
**caractérisé en ce**
**que** les signaux optiques sont générés par l'interaction d'un rayonnement électromagnétique avec les germes cristallins et sont détectés en particulier sous la forme d'une turbidité.

9. Procédé selon l'une quelconque des revendications précédentes,
**caractérisé en ce**
**que** la détermination de la position de la limite (M) de la formation de germes cristallins est effectuée au moyen d'une mesure de lumière diffuse en tant que turbidité, d'une mesure de réfléchissement, en particulier au moyen d'un laser sous la forme d'une rétrodiffusion laser concentrée (dans le jargon technique focused beam reflectance measurement, abrégé par FBRM) ou au moyen d'un procédé d'imagerie, en particulier au moyen de microscopes, en ligne dans le cristallisoir.#

10. Procédé selon la revendication 9,
**caractérisé en ce**
**que** la mesure de lumière diffuse est effectuée au moyen d'un turbidimètre ou d'un néphélomètre, et/ou
**que** la mesure de lumière diffuse en tant que turbidité est réalisée selon différents angles.

11. Procédé selon l'une quelconque des revendications 3 à 10,
**caractérisé en ce**
**que** le résultat d'évaluation sur les grandeurs de régulation en supplément de processus de cristallisation fonctionnant en parallèle par lot ou fonctionnant en continu est transmis dans éventuellement d'autres cristallisoirs.

12. Procédé selon l'une quelconque des revendications précédentes,
**caractérisé en ce**
**que** les résultats d'évaluation sont utilisés dans un système autodidacte aux fins de la régulation en ligne.

13. Procédé selon l'une quelconque des revendications 4 à 12,
**caractérisé en ce**
**qu'un** retrait et/ou une disparition de cristaux et/ou de germes cristallins est déterminé à partir des signaux optiques déterminés et/ou des signaux concernant les ultrasons, le radar et/ou les micro-ondes.

14. Procédé selon l'une quelconque des revendications précédentes,
**caractérisé en ce**
**qu'une** évaluation de la nécessité de nettoyage du cristallisoir est réalisée à partir des valeurs déterminées, en particulier une constatation qu'un processus de nettoyage est requis et/ou une constatation qu'un processus de nettoyage peut être considéré comme ayant été finalisé avec succès.

15. Cristallisoir servant à mettre en oeuvre un procédé selon l'une quelconque des revendications 1 à 14,
avec des capteurs servant à déterminer la position de la limite (M) de la formation de germes cristallins.

16. Cristallisoir selon la revendication 15,
**caractérisé en ce**
**que** le ou les capteurs est disposé ou sont disposés dans une zone sans bulles du cristallisoir.

17. Cristallisoir selon la revendication 15 ou 16,
**caractérisé en ce**
**qu'une** chambre de chauffage est prévue, et
**que** le ou les capteurs est disposé ou sont disposés sous la chambre de chauffage.

18. Cristallisoir selon l'une quelconque des revendications 15 à 17,
**caractérisé en ce**
**que** les capteurs sont des capteurs optiques et/ou des capteurs d'ultrasons, de radar et/ou de micro-ondes.
